## Europäisches Patentamt

## European Patent Office

## Office européen des brevets

(19)

(11) Veröffentlichungsnummer: **0 028 672**
**B1**

(12) **EUROPÄISCHE PATENTSCHRIFT**

(45) Veröffentlichungstag der Patentschrift:
**29.06.83**

(51) Int. Cl.³: **A 61 C 17/00**, B 08 B 3/04

(21) Anmeldenummer: **80103801.9**

(22) Anmeldetag: **04.07.80**

(54) Vorrichtung zum Reinigen von kleinen Gegenständen, insbesondere Zahnersatz.

(30) Priorität: **10.11.79 DE 7931846 U**

(43) Veröffentlichungstag der Anmeldung:
**20.05.81 Patentblatt 81/20**

(45) Bekanntmachung des Hinweises auf die Patenterteilung:
**29.06.83 Patentblatt 83/26**

(84) Benannte Vertragsstaaten:
**DE FR GB IT SE**

(56) Entgegenhaltungen:
DE-B-2511008
DE-U-7434605
GB-A-1169417
US-A-3098496
US-A-3132657
US-A-3265369
US-A-3421528
US-A-3606274

(73) Patentinhaber: **Braun Aktiengesellschaft,
Rüsselsheimer Strasse 22, D-6000 Frankfurt/Main (DE)**

(72) Erfinder: **Horz, Eberhard, Zum Talblick 13,
D-6246 Glashütten (DE)**
Erfinder: **Wirsing, Robert, Friedhofstrasse 17a,
D-6078 Neu Isenburg (DE)**
Erfinder: **Hoffmann, Günter, Sachsenring 10,
D-6238 Hofheim/Ts. (DE)**

(74) Vertreter: **Einsele, Rolf, Braun Aktiengesellschaft
Postfach 1120 Frankfurter Strasse 145, D-6242 Kronberg
Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Vorrichtung zum Reinigen von kleinen Gegenständen, insbesondere Zahnersatz.

Die Erfindung betrifft eine Vorrichtung zum Reinigen von kleinen Gegenständen, insbesondere Zahnersatz, mit einer eine Reinigungsflüssigkeit enthaltenden Wanne, einer in der Wanne drehbar gelagerten Rührscheibe und einem unterhalb der Wanne im Gerätesockel angeordneten Motor mit Kupplungsscheibe aus magnetischem Werkstoff und mit einem von der Reinigungsflüssigkeit durchspülten, herausnehmbaren, mit einem perforierten Bodenteil versehenen und im wesentlichen zylindrischen Korb zur Aufnahme der Gegenstände und einem mit dem Korb verbindbaren, Öffnungen aufweisenden Korbeinsatz mit einer Filterfolie.

Durch die DE-U Nr. 7434605 ist ein Reinigungsbad für herausnehmbare Zahnprothesen bekannt geworden, bestehend aus einer Dose zur Aufnahme einer Flüssigkeit mit einem korbartigen, in die Dose eingehängten, siebartig durchbrochenen Einsatz, wobei im Inneren der Dose ein magnetisch beeinflussbarer Rührer frei beweglich gelagert ist, der über eine unterhalb der Dose angeordnete, ein Magnetfeld erzeugende Vorrichtung in Rotation versetzt wird. Bei dieser Vorrichtung liegt die Zahnprothese auf einem korbartigen Einsatz im Inneren der Dose oberhalb des magnetisch beeinflussbaren Rührers so, dass die Reinigungsflüssigkeit die Zahnprothese allseitig umspülen kann. Der Rührer selbst ist auf einer senkrecht stehenden Welle gelagert, die am Boden der Dose befestigt ist.

Bei einem anderen bekannten Gerät dieser Art (GB-A Nr. 1169417) ist auf dem Boden der Dose für die Reinigungsflüssigkeit ein scheibenförmiger Vibrator aus dünnem Blech fest angeordnet, der über einen Elektromagneten im Fussteil des Geräts in Schwingungen versetzt wird. Die Zahnprothese ist oberhalb des Vibrators auf einem scheibenförmigen Gitter gelagert, der einen Griff aufweist, so dass das Gitter aus der Dose mit daraufliegender Zahnprothese entnommen werden kann.

Es ist weiterhin ein Prothesenreiniger bekannt (US-A Nr. 3421528), bei dem die Rührscheibe aus magnetischem Werkstoff drehbar auf einem Zapfen gelagert ist, der am Boden der Dose befestigt ist und bei dem die Zahnprothese in einen Korb mit Griffteil eingelegt ist, der im Bereich der Rührscheibe eine Öffnung aufweist, durch die eine achsiale Verlängerung der Rührscheibe nach oben zu hindurchragt. Die achsiale Verlängerung der Rührscheibe weist Rippen auf, die sicherstellen sollen, dass die Flüssigkeit die Zahnprothese besonders intensiv und auch allseits umströmt.

Schliesslich ist eine Vorrichtung zur Reinigung kleinerer Werkstücke durch den Strahl einer Waschflüssigkeit bekannt (DE-B Nr. 2511008), die aus einer Reinigungsflüssigkeit enthaltenden Wanne besteht, in der ein Korb mit perforiertem Boden herausnehmbar eingesetzt ist, wobei in diesen Korb ein Korbeinsatz eingesetzt ist, der mit dem Korb verbindbar ist und Öffnungen aufweist. Der Korbeinsatz hält einen Filter am Boden des Korbs, der der Filterung der umlaufenden Reinigungsflüssigkeit dient.

Diese bekannten Vorrichtungen haben den Nachteil, dass die von den zu reinigenden Gegenständen abgespülten Schmutzreste nach erfolgtem Reinigungsvorgang im oberen Teil des Reinigungsbads umherschwimmen, so dass die Reinigungsflüssigkeit oft erneuert werden muss.

Der vorliegenden Erfindung liegt die Aufgabe zugrunde, einen Prothesenreiniger mit elektromagnetischem Rührwerk zu schaffen, bei dem die Reinigungsflüssigkeit vergleichsweise häufig benutzt werden kann, bei dem sichergestellt ist, dass die Zahnprothese aus der Reinigungsdose entnehmbar ist, ohne dass die Hand der Bedienperson mit der aggressiven Reinigungsflüssigkeit in Berührung gelangt, bei dem die ausgespülten Schmutzpartikel aus der Dose entfernbar sind, ohne die Flüssigkeit in ein anderes Behältnis umzugiessen, und bei dem eine Feinfilterung der Reinigungsflüssigkeit stattfindet, ohne dass eine intensive Umspülung der Zahnprothese beeinträchtigt wird.

Nach der Erfindung wird dies dadurch erreicht, dass die Filterfolie in den Spalt, den Korb, und der unterhalb des Korbbodens angeordnete Korbeinsatz miteinander bilden, eingelegt ist, wobei der Spalt so bemessen ist, dass die Schmutzpartikel sich oberhalb der Filterfolie, jedoch unterhalb des Bodenteils des Korbes sammeln.

Mit Vorteil weist der Korbeinsatz einen Zapfen auf, der der Lagerung der Rührscheibe zwischen Korbeinsatz und dem Bodenteil des Korbes dient.

Vorzugsweise ist das Bodenteil des Korbs im Bereich der Rührscheibe mit einer sich oberhalb der Rührscheibe domartig erstreckenden Einbuchtung versehen, deren Wandung mit Schlitzen oder andersartigen Durchbrüchen ausgestattet ist.

Um ein leichtes Abnehmen des Korbeinsatzes vom Korb zu ermöglichen, weist der Korb Schlitze, Nuten oder Durchbrüche auf, in die der Korbeinsatz über federnde Zungen, Zapfen oder Haltefinger einrastbar ist.

Damit während des Betriebs ein Abgleiten der Rührscheibe vom Lagerzapfen vermieden wird, ist der Korb im Bereich der Einbuchtung mit Rippen oder Vorsprüngen versehen, die sich horizontal erstrecken und an denen die Oberseite der Rührscheibe anliegt.

Zweckmässigerweise ist der Zapfen zur Lagerung der Rührscheibe Teil der Filterfolie und mit dieser austauschbar. Mit Vorteil weist die Rührscheibe an ihrer Oberseite mehrere halbkugelige Noppen auf; ist im übrigen jedoch als ein flacher, scheibenförmiger Rotationskörper ausgebildet.

Schliesslich ist ein Vorzug der Erfindung, dass die Filterfolie am Korbeinsatz über an diesem angeordnete Noppen oder Vorsprünge einknöpfbar ist.

Die Erfindung lässt die verschiedensten Ausführungsmöglichkeiten zu, eine davon ist in der anhängenden Zeichnung schematisch dargestellt, die einen Teillängsschnitt durch den Prothesenreiniger zeigt.

Der Prothesenreiniger besteht im wesentlichen aus dem, den Elektromotor mit einem von diesem angetriebenen Magneten enthaltenden Fussteil 3 mit Ein-/Ausschalter 4, der abnehmbaren Wanne 5 zur Aufnahme der Reinigungsflüssigkeit 17, dem Korb 7 mit angeklipstem Korbeinsatz 6, der Rührscheibe 9, der zwischen Korb 7 und Korbeinsatz 6 eingelegten Filterfolie 10 und dem Deckel 11 zum Abdecken der Wanne 5.

Wird der im aus den beiden Gehäuseschalen 1, 2 bestehenden Fussteil 3 angeordnete Motor über den Schalter 4 eingeschaltet, so beginnt sich die Rührscheibe 9 zu drehen und setzt die Reinigungsflüssigkeit 17 über ihre Flügel oder Rippen 18 in Bewegung, so dass diese die im Korb liegenden (nicht näher dargestellten) Prothesenteile umspült und damit reinigt. Die Reinigungsflüssigkeit wird von der Rührscheibe 9 dazu durch die Durchbrüche 13 gedrückt.

Nach erfolgter Reinigung wird zunächst der Deckel 11 abgenommen und dann der Korb 7 mit dem Öffnungen 16 enthaltenden Korbeinsatz 6 und der Filterfolie 10 aus der Wanne 5 entnommen, indem der Korb 7 am domartigen Teil 7a des Korbs 7 aus der Reinigungsflüssigkeit gehoben wird. Die Reinigungsflüssigkeit verbleibt dabei, ohne dass sie Schmutzpartikel enthält, in der Wanne 5 zurück. Die Flüssigkeit 17 strömt nämlich in Pfeilrichtung A beim Herausnehmen des Korbs 7 durch die Öffnungen 19 am Boden des Korbs 7 nach unten zu, wobei sich die Schmutzpartikel oberhalb der Filterfolie 10, die unterhalb des Korbbodens 21 liegt, sammeln.

Die Filterfolie 10 kann leicht gegen eine unverbrauchte ausgetauscht werden, indem die Haltefinger 14 in Pfeilrichtung B gebogen werden, bis der Haltenocken aus der Öffnung 15 austritt und den Korbeinsatz 6 freigibt, so dass dieser nach unten zu vom Korb 7 abgezogen werden kann. Eine saubere Filterfolie 10 kann anschliessend in eine schmale ringförmige Vertiefung am Teil 6 eingelegt werden.

Die Kante 12 der Rührscheibe 9 stösst gegen Rippen 20, die am domartigen Teil 7b des Bodens des Korbs 6 vorgesehen sind, wenn die Rührscheibe 9 droht nach oben zu vom Lagerzapfen 8 abzugleiten.

Für den Fall, dass der Lagerzapfen 8 verschlossen ist, genügt es, den Korbeinsatz 6 auszutauschen.

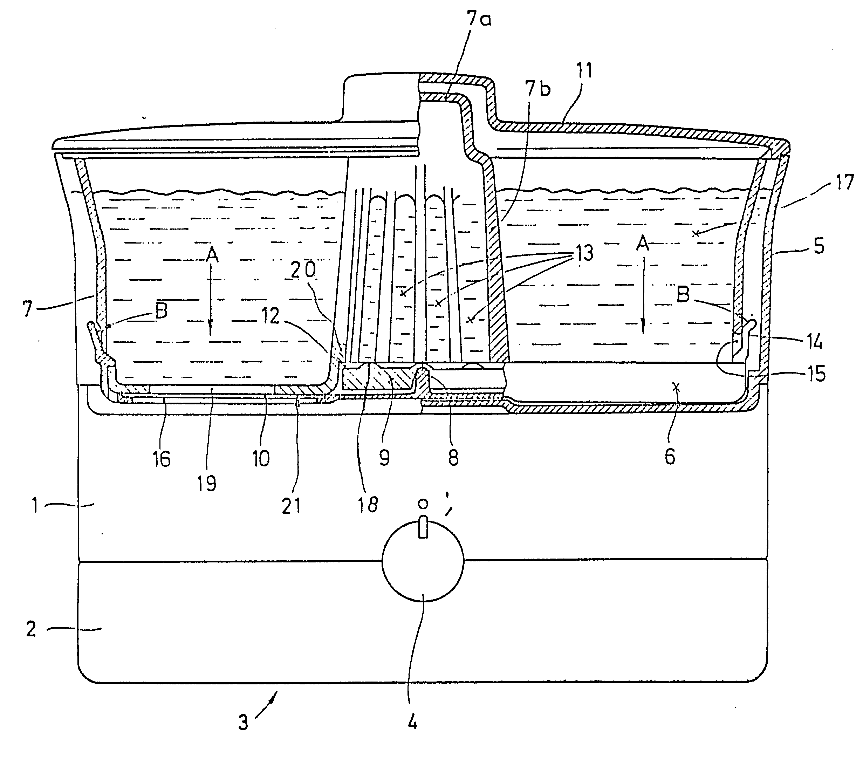

## Patentansprüche

1. Vorrichtung zum Reinigen von kleinen Gegenständen, insbesondere Zahnersatz, mit einer eine Reinigungsflüssigkeit (17) enthaltenden Wanne (5), einer in der Wanne (5) drehbar gelagerten Rührscheibe (9) und einem unterhalb der Wanne (5) im Gerätesockel (3) angeordneten Motor mit Kupplungsscheibe aus magnetischem Werkstoff und mit einem von der Reinigungsflüssigkeit (17) durchspülten, herausnehmbaren, mit einem perforierten Bodenteil (21) versehen und im wesentlichen zylindrischen Korb (7), zur Aufnahme der Gegenstände und einem mit dem Korb (7) verbindbaren, Öffnungen (16) aufweisenden Korbeinsatz (6) mit einer Filterfolie (10), dadurch gekennzeichnet, dass die Filterfolie (10) in den Spalt, den Korb (7) und der unterhalb des Bodenteils (21) angeordnete Korbeinsatz (6) miteinander bilden, eingelegt ist, wobei der Spalt so bemessen ist, dass die Schmutzpartikel sich oberhalb der Filterfolie (10), jedoch unterhalb des Bodenteils (21) des Korbs (7) sammeln.

2. Vorrichtung nach Anspruch 1, dadurch gekennzeichnet, dass der Korbeinsatz (6) einen Zapfen (8) aufweist, der der Lagerung der Rührscheibe (9) zwischen Korbeinsatz (6) und dem Bodenteil (21) des Korbs (7) dient.

3. Vorrichtung nach den Ansprüchen 1 und 2, dadurch gekennzeichnet, dass der Bodenteil (21) des Korbs (7) im Bereich der Rührscheibe (9) eine sich oberhalb der Rührscheibe (9) domartig erstreckende Einbuchtung (7b) aufweist, deren Wandung mit Schlitzen oder andersartigen Durchbrüchen (13) versehen ist.

4. Vorrichtung nach den vorhergehenden Ansprüchen, dadurch gekennzeichnet, dass der Korb (7) Schlitze, Nuten oder Durchbrüche (15) aufweist, in die der Korbeinsatz (6) über federnde Zungen, Zapfen oder Haltefinger (14) einrastbar ist.

5. Vorrichtung nach den vorhergehenden Ansprüchen, dadurch gekennzeichnet, dass der Korb (7) im Bereich der Einbuchtungen (7b) mit Rippen oder Vorsprüngen (20) versehen ist, die sich horizontal erstrecken und an denen die Oberseite (12) der Rührscheibe (9) anliegt.

6. Vorrichtung nach einem oder mehreren der vorhergehenden Ansprüche, dadurch gekennzeichnet, dass der Zapfen (8) zur Lagerung der Rührscheibe (9) Teil der Filterfolie (10) und mit dieser austauschbar ist.

7. Vorrichtung nach einem oder mehreren der vorhergehenden Ansprüche, dadurch gekennzeichnet, dass die Rührscheibe (9) an ihrer Oberseite mehrere halbkugelige Noppen (18) aufweist, im übrigen jedoch ein flacher, scheibenförmiger Rotationskörper ist.

8. Vorrichtung nach einem oder mehreren der vorhergehenden Ansprüche, dadurch gekennzeichnet, dass die Filterfolie (10) am Korbeinsatz (6) über an diesem angeordnete Noppen oder Vorsprünge einknöpfbar ist.

## Claims

1. Apparatus for cleaning small objects, especially dentures, with a tank (5) containing a cleaning liquid (17), a stirring disc (9) mounted in rotary manner in tank (5) and a motor arranged below the tank (5) in the device base (3) having a coupling disc made from magnetic material and with a removable, substantially cylindrical basket (7), which is thoroughly washed by the cleaning liquid (17) and provided with a perforated bottom part (21), said basket being used for receiving the objects, as well as a basket insert (6) having a filter foil (10), as well as opening (16) and connectable to the basket (7), characterized in that the filter foil (10) is placed in the gap formed between the basket (7) and the basket insert (6) placed underneath the bottom part (21), the gap being dimensioned in such a way that the dirt particles collect above the filter foil (10), but below the bottom part (21) of basket (7).

2. Apparatus according to claim 1, characterized in that the basket insert (6) has a pin (8) which is used for mounting the stirring disc (9) betweeen basket insert (6) and bottom part (21) of basket (7).

3. Apparatus according to claims 1 and 2, characterized in that the bottom part (21) of basket (7) has in the vicinity of stirring disc (9) a recess (7b) extending in dome-like manner above stirring disc (9), the walls of said recess being provided with slots or differently shaped openings (13).

4. Apparatus according to one of the preceding claims, characterized in that the basket (7) has slots, grooves or openings (15), into which can engage basket insert (6) via resilient tongues, pins or retaining fingers (14).

5. Apparatus according to one of the preceding claims, characterized in that, in the vicinity of recesses (7b), basket (7) is provided with ribs or projections (20) which extend horizontally and on which engage the top (12) of stirring disc (9).

6. Apparatus according to one or more of the preceding claims, characterized in that the pin (8) for mounting the stirring disc (9) forms part of the filter foil (10) and is replaceable therewith.

7. Apparatus according to one or more of the preceding claims, characterized in that, on its top, stirring disc (9) has a plurality of hemispherical protuberances (18), but otherwise is a flat, disc-shaped rotary member.

8. Apparatus according to one or more of the preceding claims, characterized in that the filter foil (10) can be attached to the basket insert (6) by means of protuberances or projections positioned on the latter.


## Revendications

1. Appareil pour nettoyer de petits articles, en particulier des prothèses dentaires, comprenant une cuvette (5) contenant un liquide de nettoyage (17), un disque agitateur (9) monté rotatif dans la cuvette (5) et un moteur disposé au-dessous de la cuvette (5), dans le socle (3) de l'appareil, muni d'un disque d'accouplement en matière magnétique, un panier amovible (7) balayé par le liquide de nettoyage (17), muni d'une partie de fond (21) perforée et essentiellement cylindrique, destiné à recevoir les articles, et une garniture de panier (6) pouvant être reliée au panier, présentant des ouvertures (16) et muni d'une feuille filtrante (10), caractérisé en ce que la feuille filtrante (10) est disposée dans la fente que le panier (7) et la garniture de panier (6) disposée au-dessous de la partie fond (21) forment ensemble, la fente étant dimensionnée de manière que les particules de salissure se rassemblent au-dessus de la feuille filtrante (10) mais au-dessous de la partie fond (21) du panier (7).

2. Appareil suivant la revendication 1, caractérisé en ce que la garniture de panier (6) présente un axe (8) qui sert au montage rotatif du disque agitateur (9) entre la garniture de panier (6) et la partie fond (21) du panier (7).

3. Appareil suivant les revendications 1 et 2, caractérisé en ce que la partie fond (21) du panier (7) présente, dans la région du disque agitateur (9), un enfoncement (7b) qui s'étend en forme de dôme au-dessus du disque agitateur (9) et dont la paroi est munie de fentes ou d'ouvertures (13) d'un autre genre.

4. Appareil suivant les revendications précédentes, caractérisé en ce que le panier (7) présente des fentes, rainures ou ouvertures (15) dans lesquelles la garniture de panier (6) peut être enclenchée par l'intermédiaire de languettes, ergots ou doigts de retenue (14) élastiques.

5. Dispositif suivant les revendications précédentes, caractérisé en ce que le panier (7) est muni, dans la région de l'enfoncement (7b), de nervures ou saillies qui s'étendent horizontalement et contre lesquels la face supérieure (12) du disque agitateur (9) s'appuie.

6. Appareil suivant une ou plusieurs des revendications précédentes, caractérisé en ce que l'axe (8) prévu pour le montage rotatif du disque agitateur (9) fait partie de la feuille filtrante (10) et peut être échangé avec celle-ci.

7. Appareil suivant une ou plusieurs des revendications précédentes, caractérisé en ce que le disque agitateur (9) présente plusieurs boutons hémisphériques (18) sur sa face supérieure et que, pour le reste, il constitue un corps de révolution plat en forme de disque.

8. Appareil suivant une ou plusieurs des revendications précédentes, caractérisé en ce que la feuille filtrante (10) peut être boutonnée sur la garniture de panier (6) par l'intermédiaire de boutons ou saillies prévus sur celle-ci.